# EUROPEAN PATENT APPLICATION

(11) **EP 3 477 454 A1**
(43) Date of publication of application: **01.05.2019**
(21) Application number: 17800688.8
(22) Date of filing: 03.04.2017
(51) Int. Cl.: G06F 3/0488, G06F 3/0481, H04M 1/00

(54) **PORTABLE TERMINAL DEVICE AND PORTABLE TERMINAL DEVICE CONTROL METHOD**

(30) Priority: 23.06.2016 JP 2016124643
(71) Applicant: KYOCERA Document Solutions Inc., Osaka-shi, Osaka (JP)
(72) Inventor: SHIMADA Akira, Osaka-shi Osaka 540-8585 (JP)
(74) Representative: BRP Renaud & Partner mbB Rechtsanwälte Patentanwälte Steuerberater
(86) International application number: PCT/JP2017/013981
(87) International publication number: WO 2017/221510

(57) **Abstract**

A mobile terminal device (10) includes: a display section (101) of a touch panel type; and a control section (102) performing screen display control on the display section (101) and operating in accordance with touch operation performed on a screen of the display section (101), wherein the control section (102) generates a virtual button (B1') corresponding to an existing button (B1) originally arranged at a predetermined position of a screen image of a desired application, arranges the virtual button (B1') at another predetermined position of the screen image, causes the display section (101) to display on the screen thereof, the screen image on which the virtual button (B1') is arranged, and upon touch operation performed on the virtual button (B1'), operates on assumption that touch operation has been performed on the existing button (B1) corresponding to the virtual button (B1').

## Description

### TECHNICAL FIELD OF INVENTION

The present invention relates to a mobile terminal device and a method for controlling a mobile terminal device, and more specifically to a technology of improving operability of the mobile terminal device with a single hand.

### BACKGROUND ART

When operating a mobile terminal device having a relatively large screen with a single hand, a finger may not reach an object such as a button located at an end of the screen. In such a case, it is required to perform touch operation on the aforementioned button by using the other hand, which imposes inconvenience on a user against user's will that he or she wishes to perform operation with his or her single hand. Patent Document 1 below discloses a technology of, upon operating a mobile terminal device with a single hand, detecting a grasping force added to a case and performing display control in a manner such as to bring an object, which is unreachable by a finger, closer to the finger in accordance with the grasping force.

### PRIOR ART LIST

### PATENT DOCUMENT

[Patent Document 1] International Publication No. 2013/035229

### SUMMARY OF THE INVENTION

### PROBLEM TO BE SOLVED BY THE INVENTION

With the technology of Patent Document 1 described above, when the button is displayed at a position not reachable by the finger while the mobile terminal device is operated with the single hand, two steps are involved including first holding the case and bringing the aforementioned button to a position reachable by the finger and then touching the button, which raises a problem that the operation is troublesome.

The present invention has been made to solve the problem described above, and it is an object of the invention to improve operability of a mobile terminal device with a single hand.

### MEANS FOR SOLVING THE PROBLEM

A mobile terminal device according to one aspect of the invention includes: a display section of a touch panel type; and a control section performing screen display control on the display section and operating in accordance with touch operation performed on a screen of the display section, wherein the control section generates a virtual button corresponding to an existing button originally arranged at a predetermined position of a screen image of a desired application, arranges the virtual button at another predetermined position of the screen image, causes the display section to display, on the screen thereof, the screen image on which the virtual button is arranged, and upon touch operation performed on the virtual button, operates on assumption that touch operation has been performed on the existing button corresponding to the virtual button.

Moreover, a method for controlling a mobile terminal device according to another aspect of the invention refers to a method for controlling a mobile terminal device including a display section of a touch panel type, and the method includes the steps of: generating a virtual button corresponding to an existing button originally arranged at a predetermined position of a screen image of a desired application; arranging the virtual button at another position of the screen image; causing the display section to display, on a screen thereof, the screen image on which the virtual button is arranged; and upon touch operation performed on the virtual button, operating on assumption that touch operation has been performed on the existing button corresponding to the virtual button.

### ADVANTAGEOUS EFFECTS OF THE INVENTION

With the present invention, when the finger does not reach the existing button on the screen being displayed, a virtual button corresponding to the existing button is generated and displayed at a position reachable by the finger, and touch operation is performed on the virtual button, thereby providing the same effect as that provided by performing touch operation on the existing button. Consequently, operability of the mobile terminal device with a single hand can be improved.

### BRIEF DESCRIPTION OF THE DRAWINGS

[Fig. 1] is an external view of a mobile terminal device according to one embodiment of the present invention.
[Fig. 2] is a block diagram schematically illustrating inner configuration of the mobile terminal device according to one embodiment of the invention.
[Fig. 3A] is a view illustrating an example of a display screen without a virtual button, and [Fig. 3B] is a view illustrating an example of a display screen with a virtual button.
[Fig. 4] is a flowchart illustrating virtual button generation procedures.
[Fig. 5] is a flowchart illustrating virtual button display control.
[Fig. 6] is a view illustrating one example of a reception screen displayed at a display section of a mobile terminal device according to Modified Example 2.
[Fig. 7] is an external view of a mobile terminal device according to Modified Example 3.
[Figs. 8A and 8B] are views illustrating how a user operates the mobile terminal device according to Modified Example 3 while grabbing the mobile terminal device with his or her single hand.
[Fig. 9] is a view illustrating one example of a region on a warped surface of a mobile terminal device according to Modified Example 4.

### MODES FOR CARRYING OUT THE INVENTION

Hereinafter, a mobile terminal device according to one embodiment of the present invention and a method for controlling same will be described with reference to the drawings.

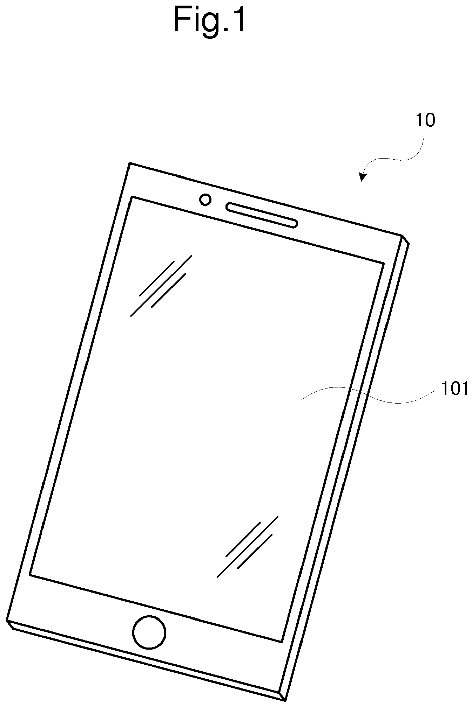

Fig. 1 is an external view of a mobile terminal device 10 according to one embodiment of the invention. The mobile terminal device 10 is a terminal which has a vertically long, rectangular, and flat outer shape and a size operable with a single hand. The mobile terminal device 10 typically sizes to have a height of approximately 140 mm, a width of approximately 70 mm, and a thickness of 7 to 8 mm, although the size of the mobile terminal device 10 is not limited thereto. That is, the mobile terminal device 10 is a terminal typically called a smartphone.

A display section 101 of a touch panel type is arranged in a manner such as to cover an almost entire front surface of the mobile terminal device 10. A screen size of the display section 101 is typically approximately 5 to 6 inches, although not the size is limited thereto. Note that a terminal having a display section 101 with a large screen of approximately nine inches or more in size is typically called a tablet terminal. It is difficult to operate the tablet terminal with a single hand, and the tablet terminal is operated with one hand while held on the other hand, or is placed on, for example, a desk for use.

Arranged on an outer surface of the mobile terminal device 10 are: in addition to the display section 101, a camera, a speaker, a light emitting diode (LED), a hard button, etc., although such members are omitted from illustration in Fig. 1 for convenience.

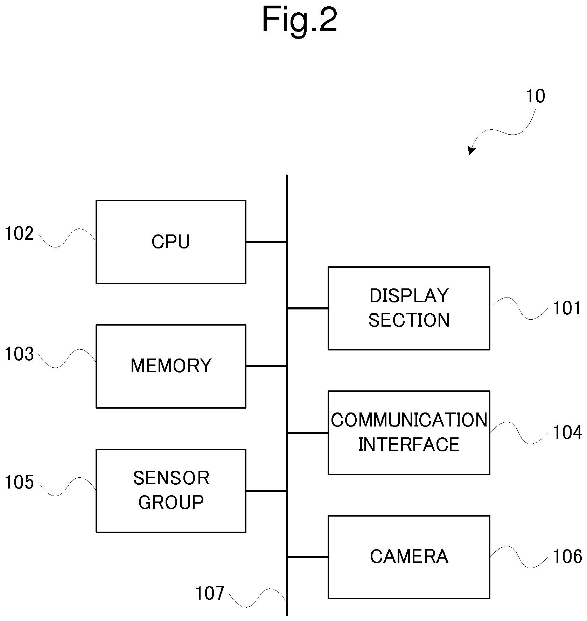

Fig. 2 is a block diagram schematically illustrating inner configuration of the mobile terminal device 10. The mobile terminal device 10 includes: the display section 101, a central processing unit (CPU) 102, a memory 103, a communication interface 104, a sensor group 105, and a camera 106. These components are connected to each other by a bus 107, enabling data or signal transmission and reception.

The display section 101 has: a display which is composed of a liquid crystal display, an organic EL display, and the like; and a touch panel which is arranged on a front surface of a display screen portion. Specifically, the display section 101 displays various images and also provides a graphical user interface (GUI) which receives input provided from a user through touch operation. This touch panel can detect touch operation and specify coordinates of a position of this touch. Consequently, the display section 101 can display various operation buttons (a button object and a soft button) at desired positions of the display screen of the display section 101 and detect whether or not touch operation has been performed on the aforementioned operation buttons.

The CPU 102 is in charge of overall operation control of the mobile terminal device 10. More specifically, the CPU 102 executes an application program (application) installed in the mobile terminal device 10 to perform screen display control on the display section 101, and also operates in accordance with touch operation performed on the screen of the display section 101. For example, the CPU 102 can execute an application for multifunction peripheral remote operation to thereby perform remote operation of each of copy, print, scan, and facsimile functions of the multifunction peripheral through the GUI displayed on the screen of the display section 101 of the mobile terminal device 10.

The memory 103 is composed of: a read only memory (ROM), a random access memory (RAM), etc. The memory 103 stores various programs executed by the CPU 102. The memory 103 also stores, for example, image data taken by the camera 106 and temporary data used by the CPU 102 upon application execution.

The communication interface 104 is a wireless communication interface which performs wireless communication with a wireless base station and an external device. For example, Wi-Fi (registered trademark) or Bluetooth (registered trademark) can be used as a wireless communication system. The communication interface 104 is also capable of making carrier communication through 3G communication and long term evolution (LTE).

The sensor group 105 includes various sensors such as an acceleration sensor, a Gyro sensor, a geomagnetic sensor, a direction sensor, and a brightness sensor.

The camera 106 is an image-taking device which has an optical system and image sensors such as a CCD image sensor or a CMOS image sensor. The camera 106 images an optical image of an object on the image sensor with the optical system and performs photoelectric conversion with the image sensor. A signal subjected to the photoelectric conversion is processed by the CPU 102, generating still image data or moving image data.

Note that the mobile terminal device 10 is loaded with: in addition to the components described above, a speaker, a microphone, an LED, a hard button, a vibrator, etc., although such components are omitted from illustration in Fig. 2 for convenience.

As described above, various screen images are displayed on the screen of the display section 101 by the application activated in the mobile terminal device 10. Upon operating the mobile terminal device 10 with a single hand, while the mobile terminal device 10 is supported with fingers other than a thumb, the free thumb (operating finger) is moved to operate the screen image. At this time, with the mobile terminal device 10 including the display section 101 with a large screen of approximately five inches or more in size, the thumb may not reach an end of the screen of the display section 101. The button arranged at such a position not reachable by the thumb needs to be operated by use of the other hand or needs to be moved to a position reachable by the thumb through screen scrolling or rotation. For this problem, with the mobile terminal device 10 according to this embodiment, a virtual button below is introduced to enable operation with a single hand even in a case where the screen size of the display section 101 is relatively large.

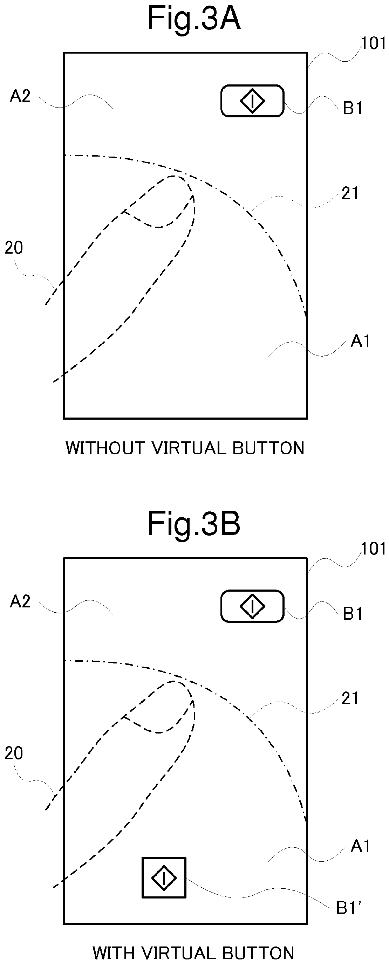

Fig. 3A is a view illustrating an example of a display screen without a virtual button. Fig. 3B is a view illustrating an example of a display screen with a virtual button.

Upon activating the application in the mobile terminal device 10, the screen image of this application is displayed on the screen of the display section 101. In case of the aforementioned application for multifunction peripheral remote control, the screen image of the application is a GUI image for performing remote operation of the multifunction peripheral. In case of a web browser, the screen image of the application is a web page image corresponding to a specified uniform resource locator (URL).

An application is typically composed of various GUI images (screen images) such as a home screen and a setting screen, and the screen image displayed on the screen of the display section 101 switches in accordance with user operation. On the other hand, in case of the web browser, the web page image is displayed on the screen of the display section 101. In a case where the web page image is long and large for a display region of the display section 101, it is possible to scroll the web page image on the screen of the display section 101. Figs. 3A and 3B illustrate examples of a partial display screen of such a GUI image or a web page image.

A screen image of an application is typically designed to have various buttons arranged at predetermined positions. Therefore, upon activating the application in the mobile terminal device 10, a button B1 is displayed at a predetermined position of the display region of the display section 101, as illustrated in Figs. 3A and 3B.

Assume here that the mobile terminal device 10 is operated with only a left hand. In this case, an operating finger 20 (a left thumb) is moved to operate the screen image of the application displayed on the screen of the display section 101. When the screen of the display section 101 is approximately five inches or more in size, the operating finger 20 may not reach on the right of the screen of the display section 101. That is, the display region of the display section 101 is divided, with a limit line 21 reachable by the operating finger 20 as a border, into: a first display region A1 reachable by the operating finger 20; and a second display region A2 not reachable by the operating finger 20. The button B1 here is arranged in the first display region A2, and thus touch operation cannot be performed on the button B1 with the operating finger 20 in case of Fig. 3A.

On the other hand, a virtual button B1' is displayed in the first display region A1 in Fig. 3B. The virtual button B1' is a button corresponding to the button B1 (existing button) originally arranged at a predetermined position of the screen image of the application. That is, when touch operation has been performed on the virtual button B1', the CPU 102 can operate on assumption that touch operation has been performed on the existing button B1 corresponding to the virtual button B1'.

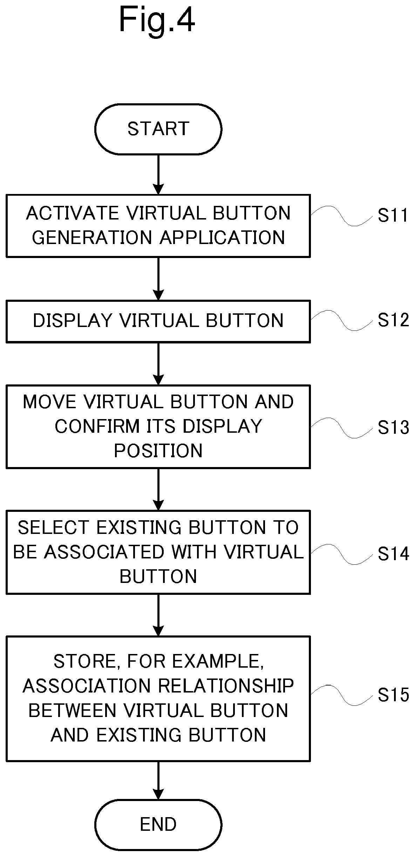

The user can generate a virtual button at desired timing. Fig. 4 is a flowchart illustrating virtual button generation procedures.

When the screen image of the application displayed on the screen of the display section 101 has any button not reachable by the operating finger 20 while the mobile terminal device 10 is operated with a single hand, the user can activate a virtual button generation application (S11). For example, as a result of making a predetermined gesture on the screen of the display section 101 with the operating finger 20, shaking or inclining the mobile terminal device 10, or uttering a predetermined word on the mobile terminal device 10, the CPU 102 judges that activation of the virtual button generation application has been requested, and reads out a program of the virtual button generation application from the memory 103 and executes the program.

When the virtual button generation application has been activated, the CPU 102 causes the display section 101 to display, on the screen thereof, the virtual button in a manner such as to superpose the virtual button on the screen image of the application being currently displayed (S12). At this point, an arrangement position of the virtual button has not yet been confirmed, and the user can drag the virtual button to freely change the aforementioned position. Then when the user has given an instruction for confirming the position of the virtual button, the CPU 102 causes the memory 103 to store the position of the virtual button on the screen image of the application being currently displayed (S13).

When a display position of the virtual button has been confirmed, the CPU 102 requests to select, out of the existing buttons on the screen image of the application being currently displayed, the button to be associated with the virtual button (S14). When the user has performed touch operation on the desired existing button, the CPU 102 associates the virtual button with the existing button on which the touch operation has been performed, and causes the memory 103 to store, for example, relationship of this association and the arrangement position of the virtual button (S15).

A virtual button can be generated for only a specific screen image in association with an application or an URL. For example, without generating a virtual button on a home screen of a given application, a virtual button can be generated only on a setting screen of the application while a virtual button can be generated on both of a home screen and a setting screen in another application.

Moreover, the virtual button can be arranged at a different position for each screen image in association with an application or an URL. For example, a virtual button corresponding to an existing button common to a home screen and a setting screen of a given application can be arranged at different positions respectively for the home screen and the setting screen.

It is also possible to automatically perform virtual button generation. For example, when the user has made a gesture drawing the limit line 21 on the screen of the display section 101 while operating the mobile terminal device 10 with his or her single hand, the CPU 102 specifies the limit line 21 based on a locus of a position of touch performed on the screen of the display section 101, and determines the first display region A1 reachable by the operating finger and the second display region A2 not reachable by the operating finger 20 in the display region of the display section 101 (Fig. 3A). Then the CPU 102 specifies the existing button B1 in the second display region A2, generates the virtual button B1' corresponding to the button B1, and causes the display section 101 to display, at an appropriate position of the first display region A1 of the display section 101, the virtual button B1'. For example, the CPU 102 can use, as the appropriate position, a position of a barycenter of the locus of the position of the touch. That is, based on the locus of the position of the touch performed on the screen of the display section 101, the CPU 102 may obtain the position of the barycenter of this locus and may generate the virtual button B1' corresponding to the existing button B1 at the obtained position of the barycenter. Consequently, the virtual button can automatically be generated. The CPU 102 can also select a plurality of positions as the appropriate position. That is, the CPU 102 may generate a plurality of virtual buttons B1' corresponding to the existing button B1 and display the plurality of virtual buttons B1' at mutually different positions. Consequently, operability of the mobile terminal device 10 with a single hand can reliably be improved. In a case where a plurality of existing buttons are present in the second display region A2, the virtual button corresponding to the frequently used existing button may automatically be generated. Moreover, in addition to a case other than the case described for example, in a case where a plurality of existing buttons are present in the second display region A2, the CPU 102 may automatically generate a plurality of virtual buttons respectively corresponding to the plurality of existing buttons. Consequently, the operability of the mobile terminal device 10 with a single hand can reliably be improved.

A skin of the virtual button is formed in various manners, for example, in a single color, through gradation, or in a pattern, but can also be set with the same skin as that of the existing button. More specifically, in step S15, the CPU 102 can acquire an image of a region surrounded by a selection frame on the screen image of the application being currently displayed and set this image as the skin of the virtual button. Consequently, as illustrated in Fig. 3B, the virtual button B1' can be provided with the same skin as that of the existing button B1, making it easy for the user to intuitively recognize association relationship between the virtual button B1' and the existing button B1.

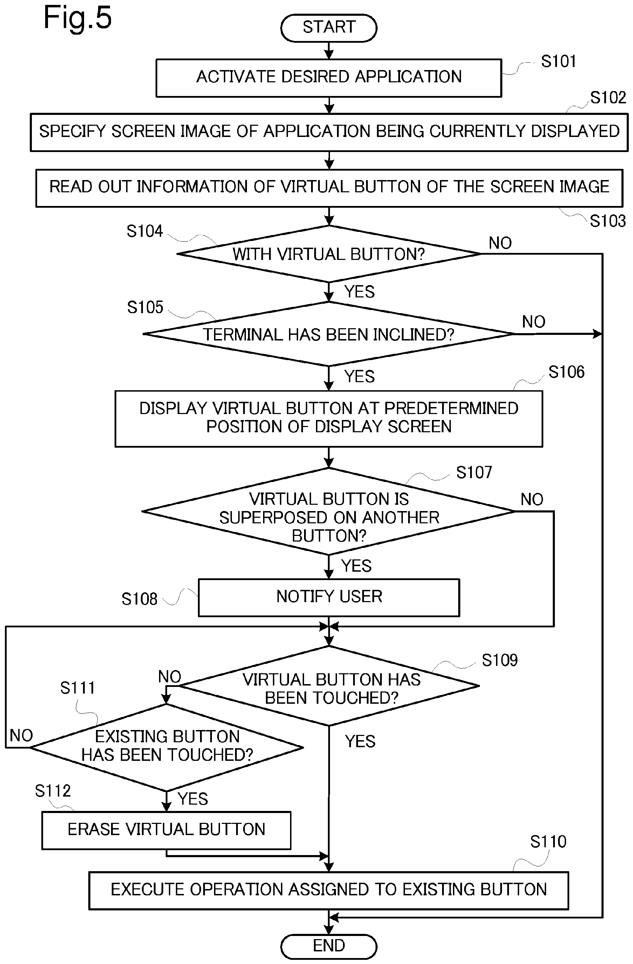

Once the virtual button has been generated on the screen image of the desired application, the virtual button is displayed from a next time when the screen image of the aforementioned application is displayed. Hereinafter, virtual button display control will be described. Fig. 5 is a flowchart illustrating the virtual button display control.

The user activates the desired application installed in the mobile terminal device 10 (S101). The CPU 102 reads out, from the memory 103, the program of the application whose activation has been instructed and executes the program. At this point, the CPU 102 also reads out, from the memory 103, the program of the virtual button display application for displaying the virtual button and executes the program.

The CPU 102 specifies to which application and to which screen image the image currently displayed on the screen of the display section 101 corresponds (S102). Then with reference to the memory 103, the CPU 102 acquires information related to the virtual button generated and arranged on the specified screen image, that is, information of, for example, an arrangement position and the skin of the virtual button and association relationship between the virtual button and the existing button (S103).

When the information related to the virtual button cannot be acquired (NO in S104), the virtual button display processing ends since no virtual button is arranged on the screen image being currently displayed.

On the other hand, when the information related to the virtual button has been acquired (YES in S104), the CPU 102 acquires inclination of the mobile terminal device 10 from a signal of the sensor group 105. Then upon judgment that the mobile terminal device 10 has been inclined by a predetermined amount or more (YES in S105), the CPU 102 causes the display section 101 to display, at a predetermined position thereof, the virtual button of the screen (S106). On the other hand, when the mobile terminal device 10 is not inclined by the predetermined amount or more (NO in S105), the CPU 102 does not display the virtual button on the screen of the display section 101.

As described above, switching is performed between display and non-display of the virtual button in accordance with the inclination of the mobile terminal device 10, in view that the virtual button is displayed in a manner such as to be superposed on the existing button since the display region of the display section 101 of the mobile terminal device 10 is limited. On the web page image, upon updating page contents, the virtual button and the existing button may be superposed on each other. Thus, by switching between lay and non-display of the virtual button with the mobile terminal device 10 inclined, the user can stop displaying of the virtual button when he or she thinks the display is unnecessary, which can improve user-friendliness.

Note that when the information related to the virtual button could be acquired while omitting step S105, the virtual button may be displayed at the predetermined position of the screen of the display section 101 without fail.

The CPU 102 can attach and display the virtual button to and at the predetermined position of the screen image of the application. In this case, scrolling the screen image of the application displayed on the screen of the display section 101 moves the display position of the virtual button following the scroll of the screen image.

Alternatively, the CPU 102 can constantly display the virtual button at the predetermined position of the display region of the display section 101. In this case, the virtual button is continuously displayed while staying at the same position even when the display screen of the display section 101 is scrolled.

When the screen display has been changed by scrolling or switching the screen image being displayed on the screen of the display section 101 while the virtual button is constantly displayed, there arises a risk that the constantly displayed virtual button is superposed on the existing button. In such a case, the CPU 102 can change, in a manner such as to avoid the existing button, the position where the virtual button is constantly displayed.

In a case where the virtual button is arranged in a manner such as to be superposed on the existing button or the position where the virtual button is constantly displayed is fixed from the beginning, the virtual button is displayed in a manner such as to be superposed on the existing button. In such a case (YES in S107), the CPU 102 notifies the user that the virtual button is superposed on the existing button (S108). Examples of a way of the notification include: hop-up display on the screen of the display section 101; emitting an alarm sound; and vibrating the mobile terminal device 10 by a vibrator.

Note that if the user notification is not required, steps S107 and S108 may be omitted.

When touch operation has been performed on the virtual button displayed on the screen of the display section 101 (YES in S109), the CPU 102 executes operation assigned to the existing button corresponding to this virtual button on assumption that touch operation has been performed on the aforementioned existing button (S110).

On the other hand, when touch operation has been performed on the existing button (NO in S109 and YES in S111), the CPU 102 erases the display of the virtual button corresponding to the existing button (S112), and executes operation assigned to the existing button on which the touch operation has been performed (S110). The aforementioned fact that the touch operation has been performed not on the virtual button but on the existing button leads to judgment that the virtual button is not required, which therefore results in assumption that the display of the virtual button may be erased. It is needless to say that step S112 may be omitted and the virtual button may continuously be displayed even when the touch operation has been performed on the existing button.

With this embodiment as described above, when the finger does not reach the existing button on the screen being displayed, the virtual button corresponding to the existing button is generated and displayed at a position reachable by the finger to perform touch operation on the virtual button, thereby providing the same effect as that provided by touch operation performed on the existing button. Consequently, operability of the mobile terminal device with a single hand can be improved.

Note that the invention is not limited to the configuration of the embodiment described above, and various modifications can be made to the invention.

### <Modified Example 1>

For example, instead of displaying the virtual button on the screen of the display section 101, the existing button may be provided in correspondence with a hard button, which can be operated while operating the mobile terminal device 10 with the single hand, and when this hard button has been pressed, processing may be performed on assumption that touch operation has been performed on the existing button.

### <Modified Example 2>

Described in the embodiment above refers to a case where the CPU 102 determines, based on the locus of the position of the touch performed on the screen of the display section 101, the first display region reachable by the operating finger and the second display region not reachable by the operating finger in the display region of the display section 101. In Modified Example 2, in a case where the locus of the position of the touch performed on the screen of the display section 101 has simply been detected, the CPU 102 does not perform the aforementioned determination processing but determines whether or not the aforementioned locus corresponds to a predefined pattern, and when the locus corresponds to the predefined pattern, the CPU 102 performs the aforementioned determination processing.

A storage part such as the memory 103 previously stores locus data indicating loci of a plurality of patterns. The CPU 102 performs pattern matching between the detected locus of the touch position and a pattern of the locus stored in, for example, the memory 103. In a case where a matching rate of the pattern matching is equal to or greater than a predefined value, the CPU 102 determines that the locus of the touch position corresponds to the predefined pattern.

Through the processing described above, with operation of drawing the locus of the predefined pattern on the display section 101 being triggered, the user can operate the CPU 102 to perform the determination processing to arrange the virtual button in the first display region and to cause the display section 101 to display the arranged virtual button in the first display region.

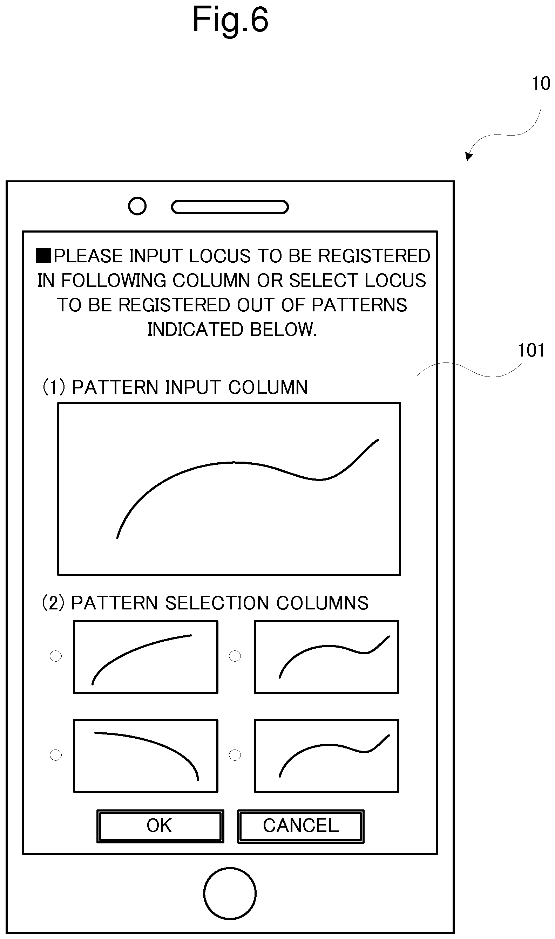

Moreover, the CPU 102 may cause the display section 101 to display a reception screen (see Fig. 6) for receiving change, addition, or deletion of the predefined pattern described above in accordance with operation provided from the user. In an example illustrated in Fig. 6, based on the locus of the touch position inputted on the aforementioned reception screen by the user, the CPU 102 generates the locus pattern, and causes the storage section such as the memory 103 to store the generated locus pattern. The CPU 102 may also cause, for example, the memory 103, to store the pattern, which has been selected by the user out of the plurality of patterns indicated on the aforementioned reception screen, as the predefined locus pattern described above.

### <Modified Example 3>

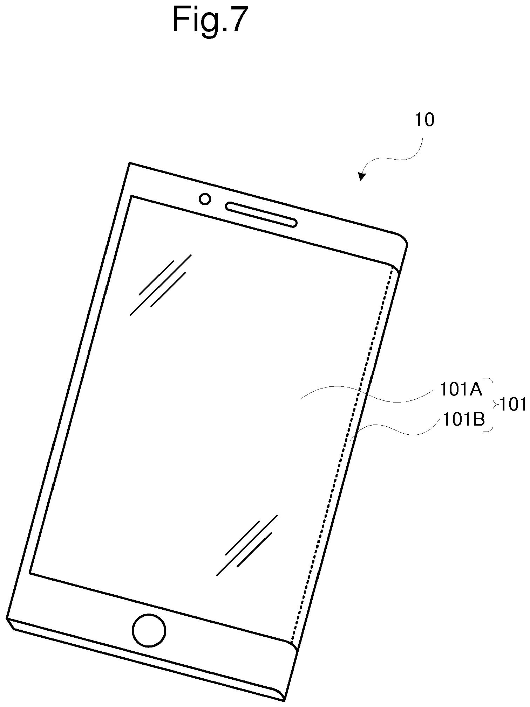

Fig. 7 is an external view of a mobile terminal device according to Modified Example 3. In the mobile terminal device according to Modified Example 3, the display section 101 is a curved display. The curved display is an integral curved display including a flat surface 101A and a warped surface 101B which is provided in a manner such as to extend from the flat surface 101A. The flat surface 101A is arranged on a main surface side of the mobile terminal device and the warped surface 101B is arranged on a side surface side of the mobile terminal device. Also arranged on a top surface of the aforementioned curved display is a touch panel, which makes it possible to detect touch operation performed on the warped surface 101B in addition to the touch operation performed on the flat surface 101A.

The CPU 102 causes the display section 101 to display, on the flat surface 101A thereof, a work screen provided upon execution of an application such as a browser or a document creation software, and causes the display section 101 to display, on the warped surface 101B thereof, information related to the work screen displayed on the flat surface 101A (for example, a list of book marks in a case where the work screen of the browser is displayed on the flat surface 101A). Consequently, the user can confirm the information related to the work screen by viewing the warped surface 101B while viewing the work screen displayed on the flat surface 101A.

Here, with the mobile terminal device according to Modified Example 3, in a case where the touch operation performed on the warped surface 101B has been detected, the CPU 102 determines, based on the position of the touch performed on the warped surface 101B, the first display region reachable by the operating finger and the second display region not reachable by the operating finger in the display regions of the display section 101.

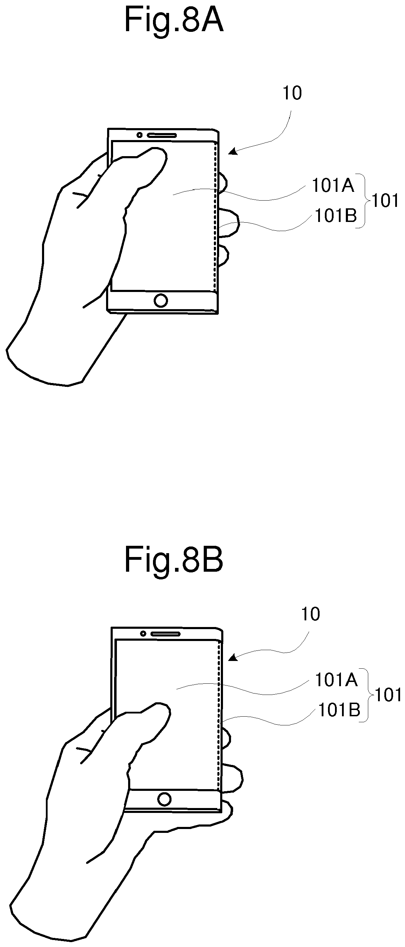

Figs. 8A and 8B are views illustrating how the user operates the mobile terminal device according to Modified Example 3 while grabbing the mobile terminal device with his or her single hand. In an example illustrated in Fig. 8A, the user operates the mobile terminal device while grabbing an area around a center of the mobile terminal device. On the other hand, in an example illustrated in Fig. 8B, the user operates the mobile terminal device while grabbing a lower side of the mobile terminal device.

Here, a range reachable by the user's operating finger varies depending on a position at which the user grabs the mobile terminal device. More specifically, as illustrated in Fig. 8A, in a case where the user grabs the area around the center of the mobile terminal device, the user's operating finger reaches the entire region of the display section 101. However, as illustrated in Fig. 8B, in a case where the user grabs the lower side of the mobile terminal device, the user's operating finger does not reach a top part of the display section 101. With the mobile terminal device according to Modified Example 3, based on the position of the touch performed on the warped surface 101B, the position at which the user grabs the mobile terminal device is specified.

In the example illustrated in Fig. 8B, the user's operating finger makes contact with a longitudinal lower end part of the warped surface 101B. In this case, the CPU 102 specifies, as the first display region reachable by the operating finger, a range separated from a position of the aforementioned contact by a predefined distance, and specifies, as the second display region, a range separated from the position of the aforementioned contact by a distance longer than the predefined distance.

Note that the CPU 102 may previously specify a gender and an age (adult or child) of the user who operates the mobile terminal device, and vary the predefined distance described above in accordance with a length of the finger assumed based on the gender and the age to specify the first display region and the second display region.

### <Modified Example 4>

With the mobile terminal device according to Modified Example 4, in a case where the touch operation performed on the warped surface 101B has been detected, when the longitudinal end part of the warped surface 101B is touched through the detected touch operation, processing of determining the first display region and the second display region and processing of arranging and displaying the virtual button in the first display region are performed. On the other hand, even in a case where the touch operation performed on the warped surface 101B has been detected, when the touch position touched through the detected touch operation is located at a longitudinal central part of the warped surface 101B and the longitudinal end part of the warped surface 101B is not touched, the processing of determining the first display region and the second display region and the processing of arranging and displaying the virtual button in the first display region are not performed.

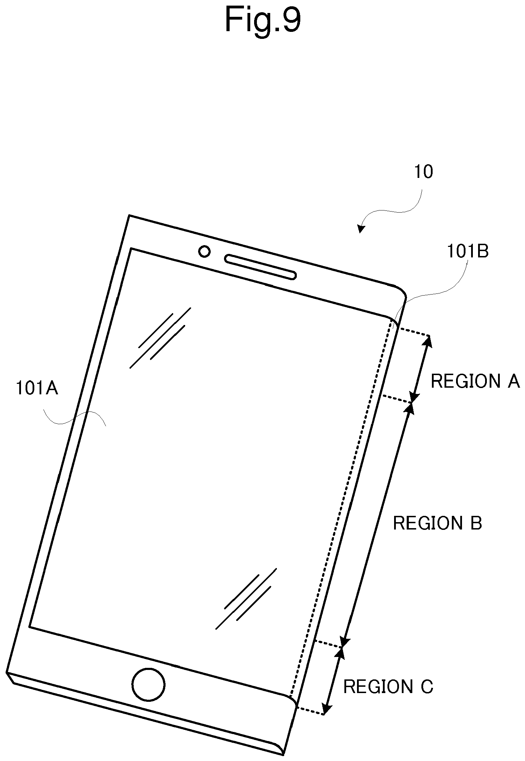

Fig. 9 is a view illustrating one example of a region in the warped surface 101B of the mobile terminal device according to Modified Example 4. As illustrated in this figure, with the mobile terminal device according to Modified Example 4, a region of the warped surface 101B is divided into: a region A and a region C located at the longitudinal end parts and a region B located at the longitudinal central part.

Even in a case where the touch operation performed on the warped surface 101B has been detected, in a case where the touch position touched through the detected touch operation is the region B located at the longitudinal central part of the warped surface 101B, the CPU 102 determines that the operating finger reaches all the regions of the display section 101 and does not perform the processing of arranging the virtual button described above. Performing such processing makes it easy to determine case where the virtual button needs to be arranged.

Note that the configuration and the processing illustrated through the embodiment and each of the modified examples described above with reference to Figs. 1 to 9 refer to just one embodiment of the invention, and the invention is not limited in any way to the aforementioned configuration and processing. Moreover, the configuration illustrated in the embodiment described above and the configuration illustrated in each of the modified examples described above may be combined together.

## Claims

1. A mobile terminal device comprising:
a display section of a touch panel type; and
a control section performing screen display control on the display section and operating in accordance with touch operation performed on a screen of the display section, wherein
the control section generates a virtual button corresponding to an existing button originally arranged at a predetermined position of a screen image of a desired application, arranges the virtual button at another predetermined position of the screen image, causes the display section to display, on the screen thereof, the screen image on which the virtual button is arranged, and upon touch operation performed on the virtual button, operates on assumption that touch operation has been performed on the existing button corresponding to the virtual button.

2. The mobile terminal device according to claim 1, wherein
the control section moves the display of the virtual button following scroll of the screen image displayed on the screen of the display section.

3. The mobile terminal device according to claim 1, wherein
the control section causes the display section to constantly display, at a predetermined position of a display region thereof, the virtual button.

4. The mobile terminal device according to claim 3, wherein
when there is a risk that the constantly displayed virtual button is superposed on the existing button as a result of changing the screen display of the display section, the control section changes, in a manner such as to avoid the existing button, a position at which the virtual button is constantly displayed.

5. The mobile terminal device according to claim 1, further comprising
a sensor detecting inclination of the mobile terminal device, wherein
the control section makes switching between display and non-display of the virtual button in accordance with the inclination of the mobile terminal device detected by the sensor.

6. The mobile terminal device according to claim 1, wherein
in a case where the virtual button is to be displayed in a manner such as to be superposed on the existing button, the control section notifies a user that the virtual button is superposed on the existing button.

7. The mobile terminal device according to claim 1, wherein
based on a locus of a position of touch performed on the screen of the display section, the control section determines a first display region reachable by an operating finger and a second display region not reachable by the operating finger in a display region of the display section, generates a virtual button corresponding to an existing button in the second display region, arranges the virtual button in the first display region, and causes the display section to display the arranged virtual button.

8. The mobile terminal device according to claim 7, wherein
based on the locus of the position of the touch performed on the screen of the display section, the control section obtains a position of a barycenter of the locus, generates the virtual button corresponding to the existing button to be displayed at the obtained position of the barycenter, and causes the display section to display the generated the virtual button.

9. The mobile terminal device according to claim 7, wherein
in a case where the locus of the position of the touch performed on the screen of the display section has been detected, the control section determines whether or not the locus of the position of the touch corresponds to a predefined pattern, and when the locus of the position of the touch corresponds to the predefined pattern, the control section performs processing of determining the first display region and the second display region, processing of arranging the virtual button in the first display region, and processing of causing the display section to display the arranged virtual button.

10. The mobile terminal device according to claim 9, wherein
the control section receives change, addition, or deletion of the predefined pattern in accordance with operation provided from the user.

11. The mobile terminal device according to claim 1, wherein
the display section is an integral curved display including: a flat surface; and a warped surface provided in a manner such as to extend from the flat surface, the flat surface is arranged on a main surface side of the mobile terminal device, and the warped surface is arranged on a side surface side of the mobile terminal device, and
in a case where touch operation performed on the warped surface has been detected, the control section, based on a position of the touch performed on the warped surface, determines the first display region reachable by the operating finger and the second display region not reachable by the operating finger in the display region of the display section, generates a virtual button corresponding to an existing button in the second display region, arranges the virtual button in the first display region, and causes the display section to display the arranged virtual button.

12. The mobile terminal device according to claim 11, wherein
in a case where the touch operation performed on the warped surface has been detected, when a longitudinal end part of the warped surface is touched through the detected touch operation, the control section performs processing of determining the first display region and the second display region, processing of arranging the virtual button in the first display region, and processing of causing the display section to display the arranged virtual button.

13. The mobile terminal device according to claim 11, wherein
the control section causes the display section to display, on the flat surface thereof, a work screen provided upon application execution, and causes the display section to display, on the warped surface thereof, related information related to the work screen displayed on the flat surface.

14. The mobile terminal device according to claim 1, wherein
when touch operation has been performed on the existing button, the control section erases the display of the virtual button corresponding to the existing button.

15. The mobile terminal device according to claim 1, wherein
in a case where there are a plurality of existing buttons, the control section generates a plurality of virtual buttons, as the virtual button, respectively corresponding to the plurality of existing buttons.

16. The mobile terminal device according to claim 1, wherein
the control section generates the plurality of virtual buttons corresponding to the existing buttons, and causes the display section to display the plurality of virtual buttons at mutually different positions.

17. A method for controlling a mobile terminal device including a display section of a touch panel type, the method comprising the steps of:
generating a virtual button corresponding to an existing button originally arranged at a predetermined position of a screen image of a desired application;
arranging the virtual button at another position of the screen image;
causing the display section to display, on a screen thereof, the screen image on which the virtual button is arranged; and
upon touch operation performed on the virtual button, operating on assumption that touch operation has been performed on the existing button corresponding to the virtual button.

## Amended claims

### Amended claims under Art. 19.1 PCT

1. A mobile terminal device (10) comprising:
a display section (101) of a touch panel type; and
a control section (102) performing screen display control on the display section (101) and operating in accordance with touch operation performed on a screen of the display section (101), wherein
the control section (102):
generates a virtual button (B1') corresponding to an existing button originally arranged at a predetermined position of a screen image of a desired application, arranges the virtual button (B1') at another predetermined position of the screen image, causes the display section (101) to display, on the screen thereof, the screen image on which the virtual button (B1') is arranged, and upon touch operation performed on the virtual button (B1'), operates on assumption that touch operation has been performed on the existing button corresponding to the virtual button (B1'); and
moves the display of the virtual button (B1') following scroll of the screen image displayed on the screen of the display section (101).

2. The mobile terminal device (10) according to claim 1 further comprising a sensor (105) detecting inclination of the mobile terminal device (10), wherein the control section (102) makes switching between display and non-display of the virtual button (B1') in accordance with the inclination of the mobile terminal device (10) detected by the sensor (105).

3. A mobile terminal device (10) comprising:
a display section (101) of a touch panel type; and
a control section (102) performing screen display control on the display section (101) and operating in accordance with touch operation performed on a screen of the display section (101), wherein
the control section (102):
generates a virtual button (B1') corresponding to an existing button originally arranged at a predetermined position of a screen image of a desired application, arranges the virtual button (B1') at another predetermined position of the screen image, causes the display section (101) to display, on the screen thereof, the screen image on which the virtual button (B1') is arranged, and upon touch operation performed on the virtual button (B1'), operates on assumption that touch operation has been performed on the existing button corresponding to the virtual button (B1');
causes the display section (101) to constantly display, at a predetermined position of a display region thereof, the virtual button (B1'); and
when there is a risk that the constantly displayed virtual button (B1') is superposed on the existing button as a result of changing the screen display of the display section (101), changes, in a manner such as to avoid the existing button, a position at which the virtual button (B1') is constantly displayed.

4. The mobile terminal device (10) according to claim 3, wherein
the control section (102) generates a plurality of virtual buttons (B1') corresponding to the existing buttons, and causes the display section (101) to display the plurality of virtual buttons (B1') at mutually different positions.

5. A mobile terminal device (10) comprising:
a display section (101) of a touch panel type; and
a control section (102) performing screen display control on the display section (101) and operating in accordance with touch operation performed on a screen of the display section (101), wherein
the control section (102):
generates a virtual button (B1') corresponding to an existing button originally arranged at a predetermined position of a screen image of a desired application, arranges the virtual button (B1') at another predetermined position of the screen image, causes the display section (101) to display, on the screen thereof, the screen image on which the virtual button (B1') is arranged, and upon touch operation performed on the virtual button (B1'), operates on assumption that touch operation has been performed on the existing button corresponding to the virtual button (B1'); and
in a case where the virtual button (B1') is to be displayed in a manner such as to be superposed on the existing button, notifies a user that the virtual button (B1') is superposed on the existing button.

6. The mobile terminal device (10) according to claim 5, wherein
in a case where there are a plurality of existing buttons, the control section (102) generates a plurality of virtual buttons (B1'), as the virtual button (B1'), respectively corresponding to the plurality of existing buttons.

7. A mobile terminal device (10) comprising:
a display section (101) of a touch panel type; and
a control section (102) performing screen display control on the display section (101) and operating in accordance with touch operation performed on a screen of the display section (101), wherein
the control section (102):
generates a virtual button (B1') corresponding to an existing button originally arranged at a predetermined position of a screen image of a desired application,
arranges the virtual button (B1') at another predetermined position of the screen image, causes the display section (101) to display, on the screen thereof, the screen image on which the virtual button (B1') is arranged, and upon touch operation performed on the virtual button (B1'), operates on assumption that touch operation has been performed on the existing button corresponding to the virtual button (B1'), and
based on a locus of a position of touch performed on the screen of the display section (101), determines a first display region reachable by an operating finger and a second display region not reachable by the operating finger in a display region of the display section (101), generates a virtual button (B1') corresponding to an existing button in the second display region, arranges the virtual button (B1') in the first display region, and causes the display section (101) to display the arranged virtual button (B1').

8. The mobile terminal device (10) according to claim 7, wherein
based on the locus of the position of the touch performed on the screen of the display section (101), the control section (102) obtains a position of a barycenter of the locus, generates the virtual button (B1') corresponding to the existing button to be displayed at the obtained position of the barycenter, and causes the display section (101) to display the generated the virtual button (B1').

9. The mobile terminal device (10) according to claim 7, wherein
in a case where the locus of the position of the touch performed on the screen of the display section (101) has been detected, the control section (102) determines whether or not the locus of the position of the touch corresponds to a predefined pattern, and when the locus of the position of the touch corresponds to the predefined pattern, the control section (102) performs processing of determining the first display region and the second display region, processing of arranging the virtual button (B1') in the first display region, and processing of causing the display section (101) to display the arranged virtual button (B1').

10. The mobile terminal device (10) according to claim 9, wherein
the control section (102) receives change, addition, or deletion of the predefined pattern in accordance with operation provided from the user.

11. A mobile terminal device (10) comprising:
a display section (101) of a touch panel type; and
a control section (102) performing screen display control on the display section (101) and operating in accordance with touch operation performed on a screen of the display section (101), wherein
the control section (102) generates a virtual button (B1') corresponding to an existing button originally arranged at a predetermined position of a screen image of a desired application, arranges the virtual button (B1') at another predetermined position of the screen image, causes the display section (101) to display, on the screen thereof, the screen image on which the virtual button (B1') is arranged, and upon touch operation performed on the virtual button (B1'), operates on assumption that touch operation has been performed on the existing button corresponding to the virtual button (B1'),
the display section (101) is an integral curved display including: a flat surface (101A); and a warped surface (101B) provided in a manner such as to extend from the flat surface (101A), the flat surface (101A) is arranged on a main surface side of the mobile terminal device (10), and the warped surface (101B) is arranged on a side surface side of the mobile terminal device (10), and
in a case where touch operation performed on the warped surface (101B) has been detected, the control section (102), based on a position of the touch performed on the warped surface (101B), determines the first display region reachable by the operating finger and the second display region not reachable by the operating finger in the display region of the display section (101), generates a virtual button (B1') corresponding to an existing button in the second display region, arranges the virtual button (B1') in the first display region, and causes the display section (101) to display the arranged virtual button (B1'), and upon touch operation performed on the virtual button (B1'), operates on assumption that touch operation has been performed on the existing button corresponding to the virtual button (B1').

12. The mobile terminal device (10) according to claim 11, wherein
in a case where the touch operation performed on the warped surface (101B) has been detected, when a longitudinal end part of the warped surface (101B) is touched through the detected touch operation, the control section (102) performs processing of determining the first display region and the second display region, processing of arranging the virtual button (B1') in the first display region, and processing of causing the display section (101) to display the arranged virtual button (B1').

13. The mobile terminal device (10) according to claim 11, wherein
the control section (102) causes the display section (101) to display, on the flat surface (101A) thereof, a work screen provided upon application execution, and causes the display section (101) to display, on the warped surface (101B) thereof, related information related to the work screen displayed on the flat surface (101A).

14. The mobile terminal device (10) according to claim 11, wherein
when touch operation has been performed on the existing button, the control section (102) erases the display of the virtual button (B1') corresponding to the existing button.

15. A method for controlling a mobile terminal device (10) including a display section (101) of a touch panel type, the method comprising the steps of:
determining, based on a locus of a position of touch performed on the screen of the display section (101), a first display region reachable by an operating finger and a second display region not reachable by the operating finger in a display region of the display section (101);
generating a virtual button (B1') corresponding to an existing button originally arranged at a predetermined position of a screen image of a desired application in the second display region, arranging the virtual button (B1') in the first display region, and causing the display section (101) to display the arranged virtual button (B1'); and
upon touch operation performed on the virtual button (B1'), operating on assumption that touch operation has been performed on the existing button corresponding to the virtual button (B1').
